Europäisches Patentamt

European Patent Office

Office européen des brevets

(19)

(11) Veröffentlichungsnummer : **0 239 720**
**B1**

(12) **EUROPÄISCHE PATENTSCHRIFT**

(45) Veröffentlichungstag der Patentschrift :
13.12.89

(21) Anmeldenummer : 87100249.9

(22) Anmeldetag : 10.01.87

(51) Int. Cl.⁴ : **C 08 J 9/30**, B 29 C 67/22 //
(B29C67/22, B29K105:04)

(54) Verfahren und Vorrichtung zum Herstellen eines fliessfähigen, zu Schaumstoff ausreagierenden Gemisches aus fliessfähigen Komponenten.

(30) Priorität : 24.01.86 DE 3602024

(43) Veröffentlichungstag der Anmeldung :
07.10.87 Patentblatt 87/41

(45) Bekanntmachung des Hinweises auf die Patenterteilung : 13.12.89 Patentblatt 89/50

(84) Benannte Vertragsstaaten :
DE FR GB IT

(56) Entgegenhaltungen :
DE--A-- 2 543 302
DE--A-- 3 442 954
US--A-- 4 157 427
US--A-- 4 376 172

(73) Patentinhaber : MASCHINENFABRIK HENNECKE GMBH
Postfach 1180
D-5205 St. Augustin 1 (DE)

(72) Erfinder : Proksa, Ferdinand, Dr.
Am Arenzberg 9
D-5090 Leverkusen 3 (DE)
Erfinder : Althausen, Ferdinand
Wiescheider Strasse 16
D-5206 Neunkirchen 1 (DE)
Erfinder : Bücher, Gottfried
Freiheitsstrasse 33a
D-5210 Troisdorf (DE)
Erfinder : Raffel, Reiner
Müschbungert 2
D-5200 Siegburg (DE)
Erfinder : Sulzbach, Hans-Michael
Hermann-Löns-Strasse 12
D-5330 Königswinter 21 (DE)

(74) Vertreter : Müller, Heinz-Gerd, Dipl.-Ing. et al
BAYER AG Konzernverwaltung RP Patentabteilung
D-5090 Leverkusen 1, Bayerwerk (DE)

EP 0 239 720 B1

**Beschreibung**

Die Erfindung bezieht sich auf ein Verfahren gemäß Oberbegriff des Anspruches 1 und eine Vorrichtung gemäß Oberbegriff des Anspruches 6 zum Herstellen eines fließfähigen, zu Schaumstoff ausreagierenden Gemisches aus fließfähigen, in Vorratsräumen gelagerten Komponenten, wobei vor dem dosierten Eintrag in eine Mischzone mindestens eine der Komponenten mit Gas beladen wird, indem diese Komponente aus dem Vorratsraum in einen Begasungsraum geführt, dort begast und wieder in den Vorratsraum zurückgeführt wird, wobei im Vorratsraum ein Gaspolster aufrechterhalten wird und das für die Begasung erforderliche Gas diesem Gaspolster entnommen wird. Dies ist allgemeiner Stand der Technik.

Bei der Schaumstoffherstellung aus fließfähigen Komponenten, insbesondere Polyurethankomponenten, hat der Gasgehalt im Reaktionsgemisch einen wesentlichen Einfluß auf den Reaktionsablauf und auf die späteren Eigenschaften des Schaumstoffes.

Aus US-A-4 157 427 ist es bekannt, einen geringen Teil einer in einem Vorratsbehälter gelagerten Reaktionskomponente für die Polyurethanschaumstoff-Herstellung im Kreislauf zu führen und dabei mit Gas in Form kleiner Bläschen zu beladen, bis eine gewünschte Gasmenge in die Reaktionskomponente eindispergiert ist.

Gemäß dem nicht vorveröffentlichten Stand der Technik DE-A-3 442 954 wird die Gasbeladung mittels eines Hohlrührers durchgeführt. Dabei wird das vom Hohlrührer angesaugte Gas direkt aus dem Gaspolster des Vorratsbehälters entnommen. Die Vorrichtung, d. h. insbesondere das Begasungsaggregat, ist dabei baulich in die Gesamtanlage so eingepaßt, daß der vom Begasungsaggregat zum Vorratsbehälter verlaufende Leitungsabschnitt so kurz und im Querschnitt so groß dimensioniert ist, daß darin kein Druckverlust auftritt. Das heißt, die begaste Komponente soll quasi wie in einer Regenrinne zurück in den Vorratsbehälter laufen.

Bei bereits vorhandenen Anlagen, welche auf diese Technik umgerüstet werden sollen, treten jedoch häufig Probleme auf, wenn am Vorratsbehälter der erforderliche große Anschlußquerschnitt nicht vorhanden ist, bzw. eine Nachrüstung ohne Produktionsunterbrechung nicht realisierbar ist und erneute Sicherheitsprüfungen des Vorratsbehälters erforderlich sind. Diese Engstelle führt zu einem Druckverlust, welcher eine einwandfreie Funktion des Begasungsaggregates gemäß DE-A-3 442 954 unmöglich macht.

Ausgehend von US-A-4 157 427 besteht die Aufgabe, eine Technik zu schaffen, welche sich sowohl problemlos in bereits vorhandene Anlagen integrieren, als auch bei neuen Anlagen verwenden läßt, wobei die sonstigen, mit der Technik gemäß DE-A-3 442 954 erhaltenen Vorteile, wie Erzeugen einer extrem feinen Dispersion, Freiheit von Treibmittelverlusten und insbesondere die selbstansaugende Wirkung des Begasungselementes, gewahrt bleiben.

Die Lösung besteht darin, daß das nach wie vor aus dem Vorratsraum entnommene Gas vor dem Eindispergieren in die Komponente auf eine höhere, dem Druck im Begasungsraum entsprechenden Druckstufe komprimiert wird.

Dadurch, daß das Gas auf eine höhere Druckstufe gebracht wird, lassen sich die Druckverluste zwischen Begasungsraum und Vorratsraum der im Kreislauf geführten flüssigen Komponente beliebig kompensieren. Mit diesem neuen Verfahren ist es möglich, insbesondere das in DE-A-3 442 954 beschriebene Begasungsaggregat problemlos und unter Beibehaltung aller Vorteile in vorhandene Anlagen zu integrieren. Das Selbstsaugen des Begasungselementes bleibt erhalten.

Um das Selbstsaugen zu begünstigen, wird vorzugsweise auch im Begasungsraum ein Gaspolster aufrechterhalten, aus welchem heraus das Begasungselement, welches das Gas in der im Begasungsraum vorhandenen Komponentenmenge eindispergiert, entnimmt.

Um das stetige Vorhandensein eines Gaspolsters im Begasungsraum zu gewährleisten, wird es gemäß einer besonderen Ausführungsform des neuen Verfahrens mittels einer Niveauregelung erzeugt und aufrechterhalten.

Gemäß einer weiteren Durchführungsform des Verfahrens wird die nicht eindispergierte überschüssige Gasmenge aus dem Begasungsraum in den Vorratsraum zurückgeführt.

Die Rückführung des überschüssigen Gases kann getrennt von der begasten Komponente oder mit ihr zusammen erfolgen. Auf diese Weise wird sichergestellt, daß das im Begasungsraum vorhandene Gaspolster nicht stetig wächst.

Gemäß einer weiteren Ausgestaltung des Verfahrens wird das aus dem Gaspolster des Vorratsraumes entnommene Gas unter dem im Begasungsraum herrschenden Druck in einem Reservoir zwischengelagert und aus diesem Reservoir dem Begasungsvorgang zugeführt.

Dieser Verfahrensschritt hat den Vorteil, daß evtl. beim Komprimieren auftretende Druckstöße im Reservoir geglättet werden.

Die Vorrichtung zur Durchführung des Verfahrens geht aus von Vorratsbehältern für die Reaktionskomponente, wobei mindestens einer dieser Vorratsbehälter über eine Kreislaufleitung mit einem ein Begasungselement aufweisendes Begasungsaggregat verbunden ist, wobei in dem vom Vorratsbehälter zum Begasungsaggregat führenden Abschnitt dieser Kreislaufleitung eine Pumpe vorgesehen ist und vom oberen Teil des Vorratsbehälters eine Gasleitung zum Begasungsaggregat führt.

Das Neue ist darin zu sehen, daß in dieser Gasleitung ein Verdichter angeordnet ist.

Da es sich nur um kleinere Fördermengen mit einer geringen zu überwindenden Druckstufe handelt, ist der Verdichter ein relativ kleines Gerät.

Soll der Begasungsvorgang gezielt vorgenommen werden, so ist bei der neuen Vorrichtung in an sich bekannter Weise an dem vom Vorratsbehälter zum Begasungsaggregat führenden Abschnitt der Kreislaufleitung ein Dichtemeßgerät angeordnet, welches mit dem Rechen- und Regelgerät für den Begasungsvorgang verbunden ist. Das Rechen- und Regelgerät wirkt sowohl auf den Antrieb eines z. B. als Begasungselement vorgesehenen Hohlrührers ein, als auch auf den Antrieb des Verdichters. Durch den Verdichter selbst wird in dem Begasungsaggregat ein Gaspolster erzeugt, aus dem das Begasungselement ansaugen kann.

Gemäß einer besonderen Ausführungsform führt vom Begasungsaggregat eine Gasrückführungsleitung zum Vorratsbehälter.

Durch sie wird die überschüssige Gasmenge, welche nicht angesaugt bzw. eindispergiert wird, zurückgeführt, so daß auch keine Treibmittelverluste auftreten können.

Vorzugsweise ist dem Begasungsaggregat ein Niveauregelgerät zugeordnet.

Auf diese Weise wird sichergestellt, daß stets ein Gaspolster im Begasungsbehälter anwesend ist.

Nach einer weiteren besonderen Ausführungsform ist zwischen Verdichter und Begasungsgerät ein Windkessel angeordnet.

Er bewirkt, daß ein eventuelles pulsierendes Arbeiten des Verdichters geglättet wird.

Vorzugsweise ist dem Begasungsaggregat ein Manometer zugeordnet, welches mit einem dem Windkessel zugeordneten Druckregelgerät verbunden ist.

Damit wird der Druck im Windkessel entsprechend dem Druck im Begasungsaggregat eingeregelt, wozu beispielsweise das Druck-Regelgerät auf den Antrieb des Verdichters einwirkt.

Vorzugsweise besteht das Begasungselement aus einem Hohlrührer.

Nach einer weiteren Ausführungsform ist in der Gasleitung vor deren Einmündung in das Begasungsaggregat ein Absperrventil angeordnet, welches bei arbeitendem Begasungselement geöffnet ist.

Auf diese Weise läßt sich die Gaszufuhr zum Begasungsaggregat unterbrechen.

In der Zeichnung ist die neue Vorrichtung in drei Ausführungsbeispielen rein schematisch dargestellt und nachstehend näher erläutert. Es zeigen:

Figur 1 ein erstes, einfaches Ausführungsbeispiel der Vorrichtung,

Figur 2 ein zweites Ausführungsbeispiel einer abgewandelten Ausführungsform, und

Figur 3 ein weiteres Ausführungsbeispiel der Vorrichtung mit größerem Regelungsaufwand.

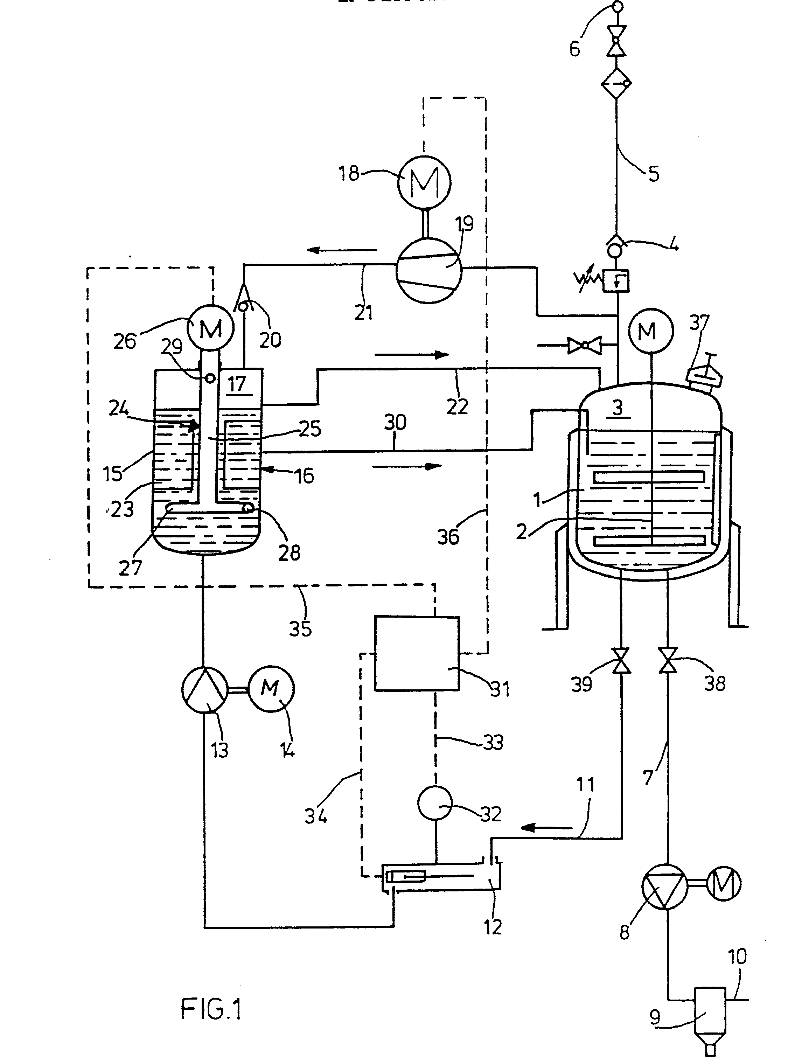

In Fig. 1 ist nur einer der beiden Vorratsbehälter 1 für die beiden Polyurethanschaumstoff-bildenden Reaktionskomponenten Polyol und Isocyanat dargestellt, und zwar jener für Polyol, welches mit Gas beladen werden soll. Der Vorratsbehälter 1 ist mit einem dauernd arbeitenden Rührwerk 2 versehen, um den Inhalt in homogenem Zustand zu erhalten. Damit im Vorratsbehälter 1 ein Gaspolster 3 vorhanden ist und ein Vordruck von 4 bar herrscht, ist er über eine ein Rückschlagventil 4 aufweisende Verbindungsleitung 5 an ein angedeutetes Druckluftnetz 6 angeschlossen. Vom Vorratsbehälter 1 führt eine Zuleitung 7 über eine Dosierpumpe 8 zu einem Mischkopf 9, in welchen eine zweite Zuleitung 10 für Isocyanat von einem nicht dargestellten Vorratsbehälter einmündet. Des weiteren führt vom Vorratsbehälter 1 ein Kreislaufleitungsabschnitt 11 über ein Dichtemeßgerät 12 und eine ständig laufende Pumpe 13 mit Antrieb 14 zu dem Begasungsbehälter 15 eines Begasungsaggregates 16. Vom Vorratsbehälter 1 führt von dem darin über dem Flüssigkeitsniveau enthaltenem Gaspolster 3 über einen mit einem Antrieb 18 versehenen Verdichter 19 und über ein Rückschlagventil 20 eine Gasleitung 21 von oben in ein Gaspolster 17 im Begasungsbehälter 15. Eine Gasrückführleitung 22 für überschüssiges Gas ist zwischen dem Begasungsbehälter 15 und dem Vorratsbehälter 1 ebenfalls vorgesehen. Der Begasungsbehälter 15 weist Strömungsbrecher 23 auf. Zum Begasungsaggregat 16 gehört auch ein im Begasungsbehälter 15 angeordneter Hohlrührer 24, dessen Hohlwelle 25 abdichtend nach außen zum Antrieb 26 geführt ist. Am unteren Ende ist der Hohlrüher 24 mit Rührflügeln 27 versehen, welche Gasaustrittsöffnungen 28 aufweisen. Im Bereich des Gaspolsters 17 weist die Hohlwelle 25 eine Ansaugöffnung 29 auf. Vom Begasungsbehälter 14 führt unterhalb des Flüssigkeitsspiegels ein Kreislaufleitungsabschnitt 30 ab und mündet in den Vorratsbehälter 1, durch welche das begaste Polyol geleitet wird. Das Dichtemeßgerät 12 ist mit einem Rechen- und Regelgerät 31 für den Begasungsvorgang gekoppelt; und zwar erhält es von einem Manometer 32 über eine Impulsleitung 33 dem gemessenen Druck entsprechende Impulse und über eine Impulsleitung 34 der gemessenen Dichte entsprechende Impulse. Vom Rechen- und Regelgerät 31 führen eine Impulsleitung 35 zum Antrieb 26 des Hohlrührers 24 sowie eine Impulsleitung 36 zum Antrieb 18 des Verdichters 19. Ein Füllstutzen am Vorratsbehälter 1 ist mit 37 bezeichnet. In der Zuleitung 7 ist ein Absperrventil 38 und im Kreislaufleitungsabschnitt 11 ein Absperrventil 39 angeordnet.

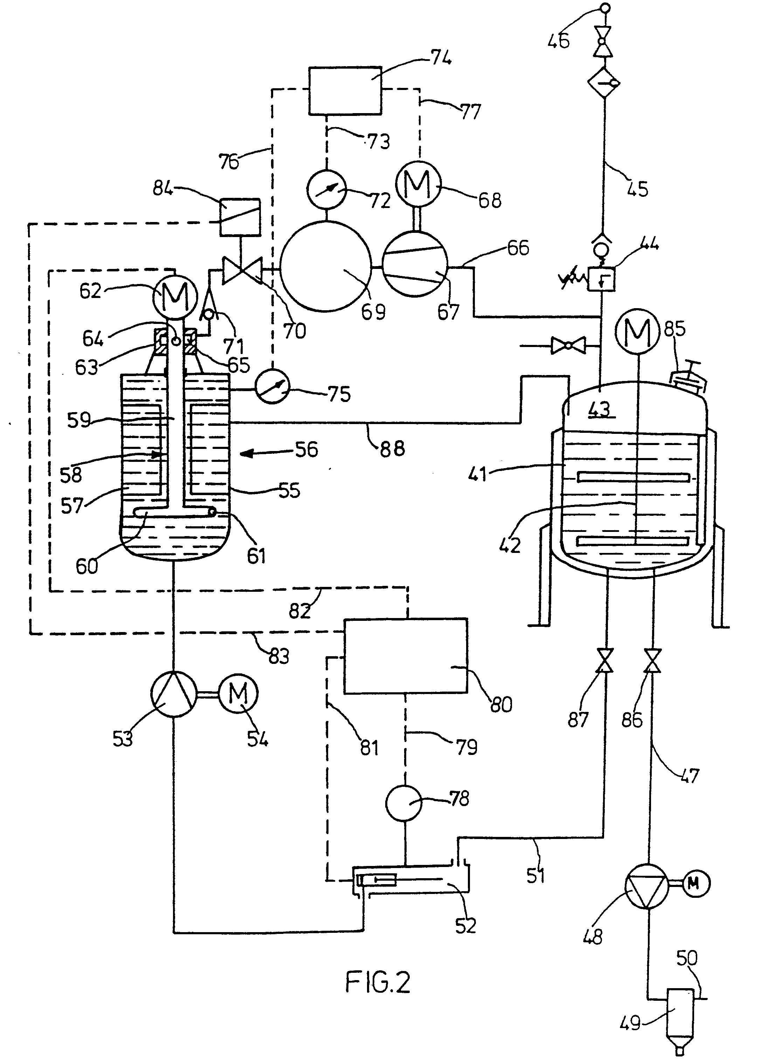

Auch in Figur 2 ist nur einer der beiden Vorratsbehälter 41 für die beiden Polyurethanschaumstoff-bildenden Reaktionskomponenten Polyol und Isocyanat dargestellt, und zwar jener für Polyol, welches mit Gas beladen werden soll. Der Vorratsbehälter 41 ist mit einem dauernd arbeitenden Rührwerk 42 ausgestattet, um den Inhalt in homogenem Zustand zu erhalten. Damit im Vorratsbehälter 41 ein Gaspolster 43 vorhanden ist und ein Vordruck von 12 bar herrscht, ist er über eine ein Rückschlagventil 44 aufweisende Verbindungsleitung 45 an ein angedeutetes Druckluftnetz 46 angeschlossen. Vom Vorratsbehälter 41 führt eine Zuleitung 47 über eine Dosierpumpe 48 zu einem Mischkopf 49, in welchen eine zweite Zuleitung 50 für Isocyanat von einem nicht dargestellten Vorratsbehälter einmündet. Des weiteres führt vom Vorratsbehälter 41 ein Kreislaufleitungsabschnitt 51 über ein Dichtemeßgerät 52 und eine ständig laufende Pumpe 53 mit Antrieb 54 zu dem Begasungsbehälter 55 eines Begasungsaggregates 56. Im Begasungsbehälter 55 sind Strömungsbrecher 57 angeordnet. Er ist völlig mit Polyol gefüllt. Zum Begasungsaggregat 56 gehört neben dem Begasungsbehälter 55 als Begasungselement 58 ein Hohlrüher. Er weist eine Hohlwelle 59 mit am unteren Ende angeordneten Rührflügeln 60 mit Gasaustrittsöffnungen 61 auf. Die Hohlwelle 59 ist nach oben abdichtend aus dem Begasungsbehälter 55 herausgeführt, mit einem Antrieb 62 verbunden und weist im Bereich einer sie umgebenden Gleitringbüchse 63 eine Gasansaugöffnung 64 auf, welche mit einem in der Gleitringbüchse 63 angeordneten Ringkanal 65 zusammenwirkt. In diesen Ringkanal 65 mündet eine aus dem Gaspolster 43 des Vorratsbehälters 41 abzweigende Gasleitung 66 ein. In dieser Gasleitung ist ein Verdichter 67 mit Antrieb 68 angeordnet, außerdem ein Windkessel 69, ein Absperrventil 70 mit Auf-Zu-Funktion, sowie ein Rückschlagventil 71. Dem Windkessel 69 ist ein Druckmanometer 72 zugeordnet, welches über eine Impulsleitung 73 mit einem Druckregelgerät 74 verbunden ist. Von einem am Begasungsbehälter 55 als Sollwertgeber angeordneten Manometer 75 führt eine Impulsleitung 76 zum Druckregelgerät 74. Dieses wirkt über eine Impulsleitung 77 auf den Antrieb 68 des Verdichters 67 ein. Das Dichtemeßgerät 52 ist mit einem Manometer 78 versehen und gibt über eine Impulsleitung 79 die gemessenen Druckwerte an ein Rechen- und Regelgerät 80 weiter, welches vom Dichtemeßgerät 52 außerdem über eine Impulsleitung 81 Dichtemeßwerte erhält. Vom Rechen- und Regelgerät 80 führt eine Impulsleitung 82 zum Antrieb 62 des Hohlrührers 58 und eine Impulsleitung 83 zum Stellmotor 84 des Absperrventils 70. Mit 85 ist der Füllstutzen des Vorratsbehälters 41 bezeichnet. In der Zuleitung 47 ist ein Absperrventil 86 angeordnet und in dem Kreislaufleitungsabschnitt 51 ein Absperrventil 87. Über einen Kreislaufleitungsabschnitt 88 gelangt das mit Gas beladene Polyol vom Begasungsbehälter 55 wieder zurück in den Vorratsbehälter 41.

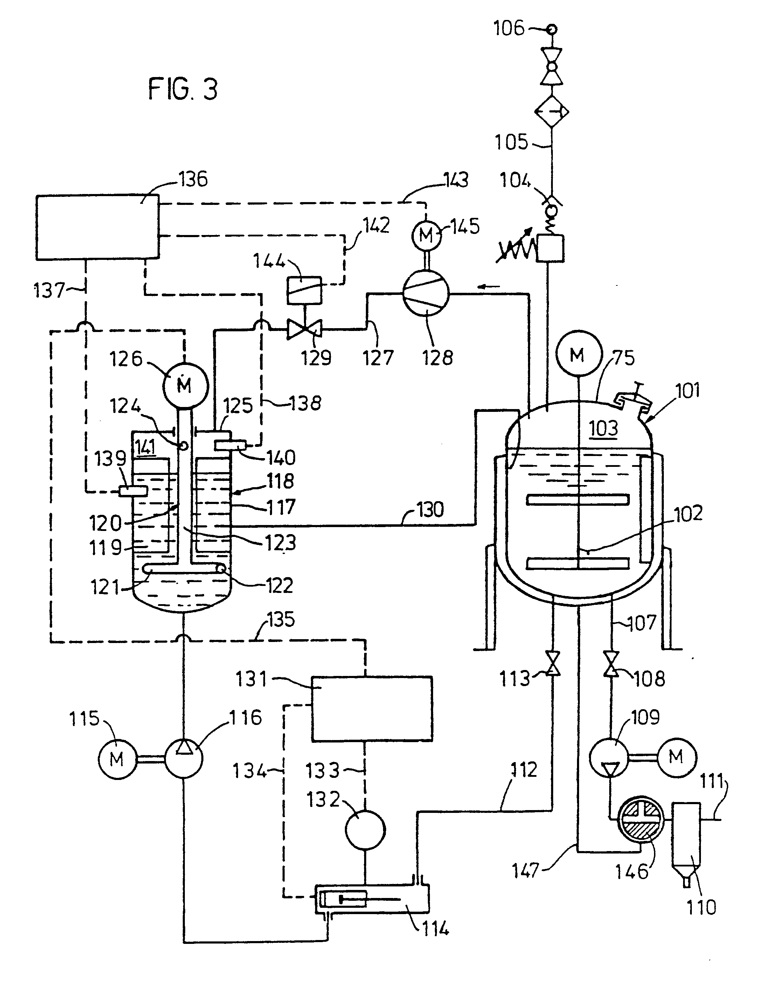

In Fig. 3 ist nur einer der beiden Vorratsbehälter 101 für die beiden Polyurethanschaumstoff-bildenden Reaktionskomponenten Polyol und Isocyanat dargestellt; und zwar jener für Polyol, welches mit Gas beladen werden soll. Der Vorratsbehälter 101 ist mit einem dauernd arbeitenden Rührwerk 102 versehen, um den Inhalt in homogenem Zustand zu erhalten. Damit im Vorratsbehälter 101 ein Gaspolster 103 vorhanden ist und ein Vordruck von 12 bar herrscht, ist er über eine ein Rückschlagventil 104 aufweisende Verbindungsleitung 105 an ein angedeutetes Druckluftnetz 106 angeschlossen. Vom Vorratsbehälter 101 führt eine Zuleitung 107 über ein Absperrventil 108 und über eine Dosierpumpe 109 zu einem Mischkopf 110, in welchen außerdem noch eine Zuleitung 111 vom nicht dargestellten Vorratsbehälter für Isocyanat einmündet. Des weiteren führt vom Vorratsbehälter 101 ein Kreislaufleitungsabschnitt 112, in welchem ein Absperrventil 113, ein Dichtemeßgerät 114 sowie eine mit einem Antrieb 115 versehene Umwälzpumpe 116 angeordnet sind, zu dem Begasungsbehälter 117 eines Begasungsaggregates 118. Im Begasungsbehälter 117, welcher Strömungsbrecher 119 aufweist, ist ein Hohlrührer 120 angeordnet, dessen Flügel 121 Austrittsöffnungen 122 aufweisen. Die Hohlwelle 123 des Hohlrührers 120 besitzt eine Ansaugöffnung 124 kurz unterhalb des oberen Behälterbodens 125 und ist mit einem Antriebsmotor 126 verbunden. Durch den oberen Behälterboden 125 mündet eine vom Gaspolster 103 des Vorratsbehälters 105 abzweigende Gasleitung 127 ein. In dieser Gasleitung 127 sind ein Verdichter 128 sowie ein schaltbares Absperrventil 129 angeordnet. Zum Zurückführen des begasten Polyols zweigt ein Kreislaufleitungsabschnitt 130 ab und mündet in den Vorratsbehälter 101. Das Dichtemeßgerät 114 ist mit einem Rechen- und Regelgerät 131 für den Begasungsvorgang gekoppelt; und zwar erhält es von einem Manometer 132 über eine Impulsleitung 133 Druckimpulse und über eine Impulsleitung 134 der gemessenen Dichte der Komponente entsprechende Impulse. Außerdem führt eine Impulsleitung 135 vom Rechen- und Regelgerät 131 zum Antrieb 126 des Hohlrührers 120. Zu einem Niveauregelgerät 136 führen Impulsleitungen 137, 138 von Näherungsschaltern 139, 140, welche im Begasungsbehälter 117 angeordnet sind, und zwar derart, daß sie den Flüssigkeitsstand im Begasungsbehälter 117 zwischen einem Minimum und einem Maximum eingrenzen. Auf diese Weise wird im Begasungsbehälter 117 über dem Flüssigkeitsniveau ein Gaspolster 141 aufrechterhalten, aus welchem der Hohlrührer 120 ansaugen kann. Vom Niveauregelgerät 136 führen Impulsleitungen 142, 143 zum Stellmotor 144 des Absperrventils 129 und zum Antrieb 145 des Verdichters 128. In der Zuleitung 107 ist ein Umschaltventil 146 kurz vor dem Mischkopf 110 angeordnet, von welchem eine Kreislaufleitung 147 zurück in den Vorratsbehälter 101 führt.

Beispiel 1

Verwendet wird die Vorrichtung gemäß Fig. 1. Der Vorratsbehälter 1 besitzt in Volumen von 0,75 m³ und ist zu 3/4 mit Polyol gefüllt; darüber befindet sich ein Gaspolster 3. Durch den Anschluß an das Druckluftnetz 6 wird im Vorratsbehälter 1 ein Vordruck von 4 bar aufrechterhalten, indem bei Unterschreiten dieses Druckes das Rückschlagventil 4 öffnet, so daß Druckluft nachströmen kann, bis das auf diesen Druck eingestellte Rückschlagventil 4 wieder schließt. Mittels des Rührwerkes 2 wird das im Vorratsbehälter 1 befindliche Polyol laufend umgewälzt, um die Füllung in homogenem Zustand zu erhalten. Bei geöffnetem Absperrhahn 39 fördert die Umwälzpumpe 13 das Polyol durch den Kreislaufleitungsabschnitt 11 über das Dichtemeßgerät 12 in den Begasungsbehälter 15 und über den Kreislaufleitungsabschnitt 30 wieder zurück in den Vorratsbehälter 1. Der Begasungsbehälter 15 hat ein Volumen von 0,02 m³. Das Dichtemeßgerät 12 mißt den Dichtewert unter dem herrschenden Druck, wobei dieser Dichtewert ein Maß für den Grad der Gasbeladung ist. Der Druckwert und der Dichtewert werden über die Impulsleitungen 33, 34 in das Regelgerät 31 eingespeist. Steigt der Dichtewert über den vorgegebenen, im Regelgerät 31 gespeicherten druckbezogenen Sollwert, so gibt das Regelgerät 31 über die Impulsleitung 35 Befehl an den Antriebsmotor 26 zum Betätigen des Hohlrührers 24. Der in der Gasleitung 21 angeordnete Verdichter 19 wird über die Impulsleitung 36 angesprochen und fördert Luft aus dem Gaspolster 3 über die Gasleitung 21 in den Begasungsbehälter 25, so daß dort ein Gaspolster 17 aufrechterhalten wird und bringt sie dabei auf die im Begasungsbehälter 25 herrschenden Druck von 7 bar. Der Hohlrührer 24 saugt aus dem Gaspolster 17 Luft an und dispergiert sie in das Polyol ein. Überschüssige, nicht angesaugte Luft strömt über die Gasrücklaufleitung 22 in den Vorratsbehälter 1 zurück, damit das Gaspolster 17 nicht zu stark anwächst. Etwa aus dem Polyol in die Luft entwichenes Treibmittel bleibt auf diese Weise im Kreislauf und wird mit der Luft wieder in das Polyol eindispergiert.

### Beispiel 2

Benutzt wird die Vorrichtung gemäß Fig. 2. Der Verfahrensablauf stimmt teils mit jenem gemäß Beispiel 1 überein, so daß hier die Erläuterungen auf den unterschiedlichen Begasungsvorgang bechränkt werden können.

Bei geöffnetem Absperrventil 87 strömt die Komponente über den Kreislaufleitungsabschnitt 51 durch das Dichtemeßgerät 52 und wird mittels der Umwälzpumpe 53 in den Begasungsbehälter 52 gefördert, wird dort mit Luft angereichert, um schließlich über den Kreislaufleitungsabschnitt 88 wieder zurück in den Vorratsbehälter 41 zu gelangen. Dabei wird im Dichtemeßgerät 52 die Dichte sowie mittels des Manometers 78 der Druck gemessen und Meßwerte über die Impulsleitungen 81 und 79 in das Rechen- und Regelgerät 80 eingespeist und mit einem vorgegebenen, druckbezogenen Dichtesollwert verglichen. Weicht die ermittelte Dichte vom Sollwert ab, so gibt das Rechen- und Regelgerät 80 über die Impulsleitungen 82 und 83 Befehle an den Stellmotor 84 zum Öffnen des Absperrventils 70 und an den Antrieb 62 zum Betätigen des Hohlrührers 59. Der Verdichter 67 saugt aus dem Gaspolster 43 des Vorratsbehälter 41, welches durch Nachfluß aus dem Druckluftnetz 46 aufrechterhalten wird, Gas an. Der Verdichter 67 speist die Luft in einen Windkessel 69 ein. Dessen Innendruck wird auf dem im Begasungsbehälter 55 herrschenden Druck gehalten, indem der vom Manometer 75 darin gemessene Druckwert über die Impulsleitung 76 in ein Druckregelgerät 74 eingespeist wird, welches von dem am Windkessel 69 angeordneten Manometer 72 über die Impulsleitung 73 den Wert des im Windkessel 69 momentan herrschenden Druckes angezeigt erhält. Das Druckregelgerät 74 vergleicht diese beiden Werte und betätigt bei zu niedrigem Druck im Windkessel 69 den Antrieb 68 des Verdichters 67 und schaltet ihn ab, sobald der richtige Dichtewert erreicht ist. Ist schließlich durch die Begasung des Polyols die gewünschte Dichte und damit die gewünschte Gasbeladung erreicht, so gibt das Rechen- und Regelgerät 80 aufgrund der erhaltenen Meßwerte Befehl über die Impulsleitungen 82 und 83, das Absperrventil 70 zu schließen und den Antrieb 62 des Hohlrührers 58 auszuschalten. Steigt der Dichtewert wieder über den Sollwert, wiederholt sich der Begasungsvorgang.

### Beispiel 3

Benutzt wird die Ausführungsform der Vorrichtung gemäß Fig. 3. Über ein Druckluftnetz 106 wird mittels des Rückschlagventils 104 im Vorratsbehälter 101 ein Druck von 12 bar aufrechterhalten. Das Rührwerk 102 arbeitet dauernd, um den Behälterinhalt in homogenem Zustand zu erhalten. Der Vorratsbehälter 101 besitzt ein Volumen von 0,5 m³ und ist zu 2/3 mit Polyol gefüllt. Bei geöffnetem Absperrhahn 113 fördert die Pumpe 116 über den den Kreislaufleitungsabschnitt 112 das Polyol in den Begasungsbehälter 117, in welchem ein Druck von 15 bar herrscht, und gelangt nach der Begasung von dort durch den Kreislaufleitungsabschnitt 130 zurück in den Vorratsbehälter 101. Stimmt die gemessene Dichte nicht mit dem in Rechen- und Regelgerät 131 eingestellten Sollwert überein, so wird über die Impulsleitung 135 der Antrieb 126 des Hohlrührers 120 betätigt, so daß der Hohlrührer 120 Gas ansaugt und in das Polyol eindispergiert. Erreicht der Flüssigkeitsstand im Begasungsbehälter 117, welcher ein Volumen von 0,01 m³ aufweist, den Näherungsschalter 140, so erhält das Niveauregelgerät 136 einen Impuls über die Impulsleitung 138 und gibt über die Impulsleitungen 142 und 143 Impulse zum Öffnen des Absperrventils 129 und zum Betätigen des Antriebes 145 des Verdichters 128. Sinkt der Flüssigkeitsspiegel bis an den Näherungsschalter 139 ab, so erhält das Niveauregelgerät 136 einen Impuls über die Impulsleitung 137 und gibt über die Impulsleitungen 142 und 143 Impulse zum Schließen des Absperrventils 129 und zum Abschalten des Antriebes 145.

### Patentansprüche

1. Verfahren zum Herstellen eines fließfähigen, zu Schaumstoff ausreagierenden Gemisches aus fließfähigen, in Vorratsräumen (1, 41, 101) gelagerten Komponenten, wobei vor dem dosierten Eintrag in eine Mischzone (9, 49, 110) mindestens eine der beiden Komponenten mit Gas beladen wird, indem diese Komponente aus dem Vorratsraum (1, 41, 101) in einen Begasungsraum (16, 56, 118) geführt, dort begast und wieder in den Vorratsraum (1, 41, 101) zurückgeführt wird ; wobei im Vorratsraum (1, 41, 101) ein Gaspolster (3, 43, 103) aufrechterhalten wird und das für die Begasung erforderliche Gas diesem Gaspolster (3, 43, 103) entnommen wird, dadurch gekennzeichnet, daß das entnommene Gas vor dem Eindispergieren in die Komponente auf eine höhere, dem Druck im Begasungsraum (16, 56, 118) entsprechende Druckstufe komprimiert wird.

2. Verfahren nach Anspruch 1, dadurch gekennzeichnet, daß auch im Begasungsraum (16, 118) ein Gaspolster (17, 141) aufrechterhalten wird, aus welchem das Gas angesaugt wird.

3. Verfahren nach Anspruch 2, dadurch gekennzeichnet, daß die nicht eindispergierte überschüssige Gasmenge aus dem Begasungsraum (16) in den vorratsraum (1) zurückgeführt wird.

4. Verfahren nach Anspruch 2, dadurch gekennzeichnet, daß das Gaspolster (141) im Begasungsraum (118) mittels einer Niveauregelung (136) erzeugt und aufrechterhalten wird.

5. Verfahren nach einem der Ansprüche 1 bis 4, dadurch gekennzeichnet, daß das aus dem Gaspolster (43) des Vorratsraumes (41) entnommene Gas unter dem im Begasungsraum (56) herrschenden Druck in einem vorgeordneten Reservoir (69) zwischengelagert wird und aus diesem Reservoir (69) dem Begasungsvorgang zugeführt wird.

6. Vorrichtung zur Durchführung des Verfahrens nach einem der Ansprüche 1-5, bestehend aus Vorratsbehältern (1, 41, 101) für die Reaktionskomponenten, wobei mindestens einer dieser Vorratsbehälter (1, 41, 101) über eine Kreislaufleitung (11, 30, 51, 88, 112, 130) mit einem ein Begasungselement (24, 58, 120) aufweisenden Begasungsaggregat (16, 56, 118) verbunden ist, wobei in dem vom Vorratsbehälter (1, 41, 101) zum Begasungsaggregat (16, 56, 118) führenden Abschnitt (11, 51, 112) dieser Kreislaufleitung (11, 30, 51, 88, 112, 130) eine Pumpe (13, 53, 116) vorgesehen ist, und vom oberen Teil des Vorratsbehälters (1, 41, 101) eine Gasleitung (21, 66, 127) zum Begasungsaggregat (16, 56, 118) führt, dadurch gekennzeichnet, daß in dieser Gasleitung (21, 66, 127) ein Verdichter (19, 67, 128) angeordnet ist.

7. Vorrichtung nach Anspruch 6, dadurch gekennzeichnet, daß in dem vom Vorratsbehälter (1, 41, 101) zum Begasungsaggregat (16, 56, 118) führenden Abschnitt (11, 51, 112) der Kreislaufleitung (11, 30, 51, 88, 112, 130) ein Dichtemeßgerät (12, 52, 114) angeordnet ist, welches mit einem Rechen- und Regelgerät (31, 80, 131) für den Begasungsvorgang verbunden ist.

8. Vorrichtung nach einem der Ansprüche 6 oder 7, dadurch gekennzeichnet, daß vom Begasungsaggregat (16) eine Gasrückführleitung (22) zum Vorratsbehälter (1) führt.

9. Vorrichtung nach einem der Ansprüche 6 oder 7, dadurch gekennzeichnet, daß dem Begasungsaggregat (118) ein Niveauregelgerät (136) zugeordnet ist.

10. Vorrichtung nach einem der Ansprüche 6 oder 7, dadurch gekennzeichnet, daß in der Gasleitung (66) zwischen Verdichter (67) und Begasungsaggregat (56) ein Windkessel (89) angeordnet ist.

11. Vorrichtung nach Anspruch 10, dadurch gekennzeichnet, daß dem Begasungsaggregat (56) ein Manometer (75) zugeordnet ist, welches mit einem dem Windkessel (69) zugeordneten Druckregelgerät (74) verbunden ist.

12. Vorrichtung nach einem der Ansprüche 6 bis 11, dadurch gekennzeichnet, daß das Begasungselement (24, 58, 120) aus einem Hohlrührer (24, 58, 120) besteht.

13. Vorrichtung nach einem der Ansprüche 6, 7 oder 9 bis 12, dadurch gekennzeichnet, daß in der Gasleitung (66, 127) vor deren Einmündung in das Begasungsaggregat (56, 118) ein Absperrventil (70, 129) angeordnet ist, welches bei arbeitendem Begasungselement (58, 120) geöffnet ist.

## Claims

1. Method of producing a flowable mixture of flowable components stored in storage chambers (1, 41, 101) which reacts to form a foam, in which before dosaged introduction into a mixing zone (9, 49, 110) at least one of the two components is charged with gas by taking this component from the storage chamber to a gas charging chamber (16, 56, 118) where it is charged with gas and then returning it to the storage chamber (1, 41, 101), a gas cushion (3, 43, 103) being maintained in the storage chamber (1, 41, 101) and the gas necessary for the gas charging being taken from this gas cushion (3, 43, 103), characterised in that the removed gas is compressed to a higher pressure stage corresponding to the pressure in the gas charging chamber (16, 56, 118) before it is dispersed in the component.

2. Method according to claim 1, characterised in that a gas cushion (17, 141) from which the gas is withdrawn is also maintained in the gas charging chamber (16, 118).

3. Method according to claim 2, characterised in that the excess quantity of gas which is not dispersed in the component is returned from the gas charging chamber (16) to the storage chamber (1).

4. Method according to claim 2, characterised in that the gas cushion (141) is produced and maintained in the gas charging chamber (118) by means of a level regulator (136).

5. Method according to one of claims 1 to 4, characterised in that the gas removed from the gas cushion (43) of the storage chamber (41) is stored temporarily in a reservoir (56) arranged in front at the pressure prevailing in the gas charging chamber (56) and is returned from this reservoir (69) to the gas charging process.

6. Apparatus for carrying out the method according to one of claims 1 to 5, consisting of storage vessels (1, 41, 101) for the reaction components, in which at least one of these storage vessels (1, 41, 101) is connected via a circulating pipe (11, 30, 51, 88, 112, 130) to a gas charging assembly (16, 56, 118) having a gas charging element (24, 58, 120), a pump (13, 53, 116) is provided in the section (11, 51, 112) of this circulating pipe (11, 30, 51, 88, 112, 130) leading from the storage vessel (1, 41, 101) to the gas charging assembly (16, 56, 118), and a gas pipe (21, 66, 127) leads from the upper part of the storage vessel (1, 41, 101) to the gas charging assembly (16, 56, 118), characterised in that a compressor (19, 67, 128) is arranged in this gas pipe (21, 66, 127).

7. Apparatus according to claim 6, characterised in that a densimeter (12, 52, 114) which is connected to a calculating and control device (31, 80, 131) for the gas charging process is arranged in the section (11, 51, 112) of the circulating pipe (11, 20, 51, 88, 112, 130) leading from the storage vessel (1, 41, 101) to the gas charging assembly (16, 56, 118).

8. Apparatus according to one of claims 6 or 7, characterised in that a gas return pipe (22) leads from the gas charging assembly (16) to the storage vessel (1).

9. Apparatus according to one of claims 6 or 7, characterised in that a level regulator (136) is associated with the gas charging assembly (118).

10. Apparatus according to one of claims 6 or 7, characterised in that an air vessel (89) is arranged in the gas pipe (66) between the compressor (67) and the gas charging apparatus (56).

11. Apparatus according to claim 10, characterised in that a manometer (75) which is connected to the pressure control device (74) is associated with the gas charging assembly.

12. Apparatus according to one of claims 6 to 11, characterised in that the gas charging element (24, 58, 120) consists of a hollow stirrer (24, 58, 120).

13. Apparatus according to one of claims 6, 7 or 9 to 12, characterised in that a shut-off valve (70, 129) which is opened when the gas charging element (58, 120) is working is arranged in the gas pipe (66, 127) before the point where the latter opens into the gas charging assembly (56, 118).

**Revendications**

1. Procédé de fabrication d'un mélange fluide, réagissant pour donner de la mousse, constitué de composants fluides, stockés dans des espaces de stockage (1, 41, 101), étant précisé qu'avant leur apport dosé dans une zone de mélange (9, 49, 110), on charge en gaz au moins l'un des deux composants, en ce sens que l'on fait passer ce composant, depuis l'espace de stockage (1, 41, 101), dans un espace de gazage (16, 56, 118), qu'on l'y gaze et qu'on le refait passer dans l'espace de stockage (1, 41, 101) ; étant précisé que dans l'espace de stockage (1, 41, 101), on maintient un matelas de gaz (3, 43, 103) et que l'on prélève dans ce matelas de gaz (3, 43, 103) le gaz nécessaire pour le gazage, caractérisé en ce qu'avant de le disperser dans le composant, on

comprime le gaz prélevé à un étage de pression plus élevé, correspondant à la pression régnant dans l'espace de gazage (16, 56, 118).

2. Procédé selon la revendication 1, caractérisé en ce que l'on maintient également dans l'espace de gazage (16, 118) un matelas de gaz (17, 141) d'où le gaz est aspiré.

3. Procédé selon la revendication 2, caractérisé en ce que l'on refait passer, depuis l'espace de gazage (16), dans l'espace de stockage (1), la quantité de gaz en excès, non dispersée dans le composant.

4. Procédé selon la revendication 2, caractérisé en ce que le matelas de gaz (141) est produit et maintenu dans l'espace de gazage (118) au moyen d'une régulation de niveau (136).

5. Procédé selon l'une des revendications 1 à 4, caractérisé en ce que l'on entrepose dans un réservoir (69) disposé en amont, sous la pression régnant dans l'espace de gazage (56), le gaz prélevé dans le matelas de gaz (43) de l'espace de stockage (41), et que, depuis ce réservoir (69), on l'amène au processus de gazage.

6. Dispositif pour l'exécution du procédé selon l'une des revendications 1-5, constitué de réservoirs de stockage (1, 41, 101) pour les composants de la réaction, étant précisé qu'au moins l'un de ces réservoirs de stockage (1, 41, 101) est relié, par l'intermédiaire d'une conduite de recyclage (11, 30, 51, 88, 112, 130), avec un groupe de gazage (16, 56, 118) présentant un organe de gazage (24, 58, 120), étant précisé qu'une pompe (13, 53, 116) est prévue dans le tronçon (11, 51, 112) de cette conduite de recyclage (11, 30, 51, 88, 112, 130) qui conduit du réservoir de stockage (1, 41, 101) au groupe de gazage (16, 56, 118) et que, de la partie supérieure du réservoir de stockage (1, 41, 101), une conduite de gaz (21, 66, 127) conduit au groupe de gazage (16, 56, 118), caractérisé en ce que dans cette conduite de gaz (21, 66, 127) est disposé un compresseur (19, 67, 128).

7. Dispositif selon la revendication 6, caractérisé en ce que, sur le tronçon (11, 51, 112) de la conduite de recyclage (11, 30, 51, 88, 112, 130) qui conduit du réservoir de stockage (1, 41, 101) au groupe de gazage (16, 56, 118) est disposé un appareil (12, 52, 114) de mesure de la densité qui est relié à un appareil (31, 80, 131) de calcul et de régulation pour le processus de gazage.

8. Dispositif selon l'une des revendications 6 ou 7, caractérisé en ce que, depuis le groupe de gazage (16), une conduite (22) de retour du gaz conduit au réservoir de stockage (1).

9. Dispositif selon l'une des revendications 6 ou 7, caractérisé en ce qu'au groupe de gazage (118) correspond un appareil (56) de régulation de niveau.

10. Dispositif selon l'une des revendications 6 ou 7, caractérisé en ce que sur la conduite de gaz (66), entre le compresseur (67) et le groupe de gazage (56), est disposé un réservoir d'air (69).

11. Dispositif selon la revendication 10, caractérisé en ce qu'au groupe de gazage (56) correspond un manomètre (75) qui est relié avec un appareil (74) de régulation de la pression correspondant au réservoir d'air (69).

12. Dispositif selon l'une des revendications 6 à 11, caractérisé en ce que l'organe de gazage (24, 58, 120) est constitué d'un agitateur creux (24, 58, 120).

13. Dispositif selon l'une des revendications 6, 7 ou 9 à 12, caractérisé en ce que sur la conduite de gaz (66, 127), avant qu'elle ne débouche dans le groupe de gazage (56, 118), est disposé un robinet d'arrêt (70, 129) qui est ouvert lorsque l'organe de gazage (58, 120) travaille.

FIG.1

EP 0 239 720 B1

FIG.2

2

FIG. 3